# EUROPEAN PATENT APPLICATION

(11) **EP 4 797 113 A1**
(43) Date of publication of application: **26.08.2026**
(21) Application number: 24892826.9
(22) Date of filing: 12.07.2024
(51) Int. Cl.: G06F 16/22

(54) **DATA STORAGE METHOD AND DEVICE AND STORAGE MEDIUM**

(30) Priority: 21.11.2023 CN 202311558370; 27.03.2024 CN 202410372304
(71) Applicant: Huawei Cloud Computing Technologies Co., Ltd., Gui'an New District, Guizhou 550025 (CN)
(72) Inventor: HUANG, Feiteng, Guiyang, Guizhou 550025 (CN); LIU, Chao, Guiyang, Guizhou 550025 (CN); YANG, Changjie, Guiyang, Guizhou 550025 (CN); XU, Ran, Guiyang, Guizhou 550025 (CN); REN, Bo, Guiyang, Guizhou 550025 (CN); ZHANG, Wenliang, Guiyang, Guizhou 550025 (CN); HU, Yafan, Guiyang, Guizhou 550025 (CN)
(74) Representative: Grünecker Patent- und Rechtsanwälte PartG mbB
(86) International application number: PCT/CN2024/105142
(87) International publication number: WO 2025/107662

(57) **Abstract**

This application discloses a data storage method and apparatus, and a storage medium, and belongs to the communication field. The method includes: receiving a plurality of pieces of data, where each piece of data includes tag values of a plurality of tags, the plurality of tags include a first tag and a second tag that are specified as a sort key, and the first tag ranks before the second tag in the sort key; determining a tag value set to which a tag value of the first tag in each piece of data belongs; determining a storage sequence of the plurality of pieces of data based on a sequence in the sort key, identification information of the tag value set to which the tag value of the first tag in each piece of data belongs, and a tag value of the second tag in each piece of data; and storing the plurality of pieces of data based on the storage sequence of the plurality of pieces of data. This application can improve orderliness of data stored in a database.

## Description

This application claims priority to Chinese Patent Application No. 202311558370.2, filed on November 21, 2023 and entitled "METHOD FOR QUANTIZING CLUSTERED INDEX", which is incorporated herein by reference in its entirety. In addition, this application further claims priority to Chinese Patent Application No. 202410372304.4, filed on March 27, 2024 and entitled "DATA STORAGE METHOD AND APPARATUS, AND STORAGE MEDIUM", which is incorporated herein by reference in its entirety.

### TECHNICAL FIELD

This application relates to the communication field, and in particular, to a data storage method and apparatus, and a storage medium.

### BACKGROUND

A database is a warehouse for storing data. The database usually has a large storage space, and can store millions, tens of millions, or hundreds of millions of pieces of data.

Each piece of data stored in the database includes a group of tag values of a plurality of tags. A specific tag in the plurality of tags may have a large quantity of different tag values. When same tag values are stored in a scattered manner, local orderliness of the data stored in the database is poor.

Poor local orderliness of the data stored in the database may affect an operation of data processing. For example, if data including the tag value needs to be queried for from the database, due to poor local orderliness of the data, a data range that needs to be scanned is large, and data query efficiency is extremely low. Therefore, how to improve orderliness of the data stored in the database is an urgent problem to be resolved.

### SUMMARY

This application provides a data storage method and apparatus, and a storage medium, to improve orderliness of data stored in a database. The technical solutions are as follows.

According to a first aspect, this application provides a data storage method. In the method: receiving a plurality of pieces of data, where each piece of data includes tag values of a plurality of tags, the plurality of tags include a first tag and a second tag that are specified as a sort key, and the first tag ranks before the second tag in the sort key; determining a tag value set to which a tag value of the first tag in each piece of data belongs; determining a storage sequence of the plurality of pieces of data based on a sequence in the sort key, identification information of the tag value set to which the tag value of the first tag in each piece of data belongs, and a tag value of the second tag in each piece of data; and storing the plurality of pieces of data based on the storage sequence of the plurality of pieces of data.

For each piece of data, in addition to the tag value, the tag value set to which the tag value of the first tag in the data belongs further includes another tag value of the first tag. In this way, cardinality of the tag value set to which the tag value of the first tag in each piece of data belongs is far less than cardinality of the tag value of the first tag in each piece of data. Because the first tag ranks before the second tag in the sort key, the storage sequence of the plurality of pieces of data is determined based on the sequence in the sort key, the identification information of the tag value set to which the tag value of the first tag in each piece of data belongs, and the tag value of the second tag in each piece of data. After the plurality of pieces of data are stored based on the storage sequence of the plurality of pieces of data, local orderliness of tag values of the second tag in the plurality of pieces of data can be improved, that is, orderliness of storing the data in the database can be improved.

In a possible implementation, data structure information is received, where the data structure information is used to specify the first tag and the second tag as the sort key, the data structure information includes quantization identification information, and the quantization identification information indicates the first tag. In this way, based on the quantization identification information, a tag value that needs to be quantized and that is of a specific tag in each piece of data may be learned, to determine a tag value set to which the tag value belongs.

In another possible implementation, the tag value set to which the tag value of the first tag in each piece of data belongs is determined based on a granularity of the tag value set and the tag value of the first tag in each piece of data. The quantization identification information further indicates the granularity of the tag value set, or the granularity of the tag value set is determined based on a feature of the tag value of the first tag in the stored data, to improve flexibility of obtaining the granularity of the tag value set.

In another possible implementation, a tag that needs to be quantized is determined, where the tag that needs to be quantized is a tag having a tag value whose cardinality meets a high-cardinality condition in the plurality of tags. When the first tag is a tag that needs to be quantized, the tag value set to which the tag value of the first tag in each piece of data belongs is determined. Because the tag having the tag value whose cardinality meets the high-cardinality condition is used as the tag that needs to be quantized, a tag having a tag value whose cardinality does not meet the high-cardinality condition is not used as the tag that needs to be quantized, to reduce a quantity of tags that need to be quantized and save compute resources.

In another possible implementation, the tag value set to which the tag value of the first tag in each piece of data belongs is a tag value range including the tag value of the first tag in each piece of data, and the granularity of the tag value set is a length of the tag value range.

In another possible implementation, index information of the plurality of pieces of data is constructed. The index information includes identification information of a tag value set to which a tag value of a first tag in at least one piece of selected data belongs, and two pieces of adjacently selected data are separated by one or more pieces of data in the storage sequence. In this way, when data is queried, a range of to-be-scanned data may be determined by using the index information, and in comparison with query in an entire database, query performed in the data range can improve query efficiency.

In another possible implementation, a query request is received, where the query request includes a query condition related to the first tag. To-be-scanned data in the plurality of pieces of data is determined based on the query condition and the identification information that is of the tag value set to which the tag value of the first tag belongs and that is in the index information. The to-be-scanned data is queried to obtain a query result that meets the query condition. The to-be-scanned data in the plurality of pieces of data is determined based on the query condition and the identification information that is of the tag value set to which the tag value of the first tag belongs and that is in the index information, so that the range of the to-be-scanned data can be reduced, to improve query efficiency.

According to a second aspect, this application provides a data storage apparatus, configured to perform the method in any one of the first aspect or the possible implementations of the first aspect. Specifically, the apparatus includes units configured to perform the method in any one of the first aspect or the possible implementations of the first aspect.

According to a third aspect, this application provides a compute device cluster. The compute device cluster includes at least one compute device, and each compute device includes a processor and a memory.

A processor of the at least one compute device is configured to execute instructions stored in the memory of the at least one compute device, to enable the compute device cluster to perform the method in any one of the first aspect or the possible implementations of the first aspect.

According to a fourth aspect, this application provides a computer program product including instructions. When the instructions are executed by a compute device cluster, the compute device cluster is enabled to perform the method in any one of the first aspect or the possible implementations of the first aspect.

According to a fifth aspect, this application provides a computer-readable storage medium, including computer program instructions. When the computer program instructions are executed by a compute device cluster, the compute device cluster performs the method in any one of the first aspect or the possible implementations of the first aspect.

According to a sixth aspect, this application provides a chip, including a memory and a processor. The memory is configured to store computer instructions, and the processor is configured to invoke the computer instructions from the memory and run the computer instructions, to perform the method in any one of the first aspect or the possible implementations of the first aspect.

### BRIEF DESCRIPTION OF DRAWINGS

FIG. 1 is a diagram of a network architecture according to an embodiment of this application;
FIG. 2 is a flowchart of a data storage method according to an embodiment of this application;
FIG. 3 is a diagram of a first editing interface according to an embodiment of this application;
FIG. 4 is a diagram of another second editing interface according to an embodiment of this application;
FIG. 5 is a flowchart of a data query method according to an embodiment of this application;
FIG. 6 is a diagram of a structure of a data storage apparatus according to an embodiment of this application;
FIG. 7 is a diagram of a structure of a compute device according to an embodiment of this application;
FIG. 8 is a diagram of a structure of a data storage cluster according to an embodiment of this application; and
FIG. 9 is a diagram of a structure of another data storage cluster according to an embodiment of this application.

### DESCRIPTION OF EMBODIMENTS

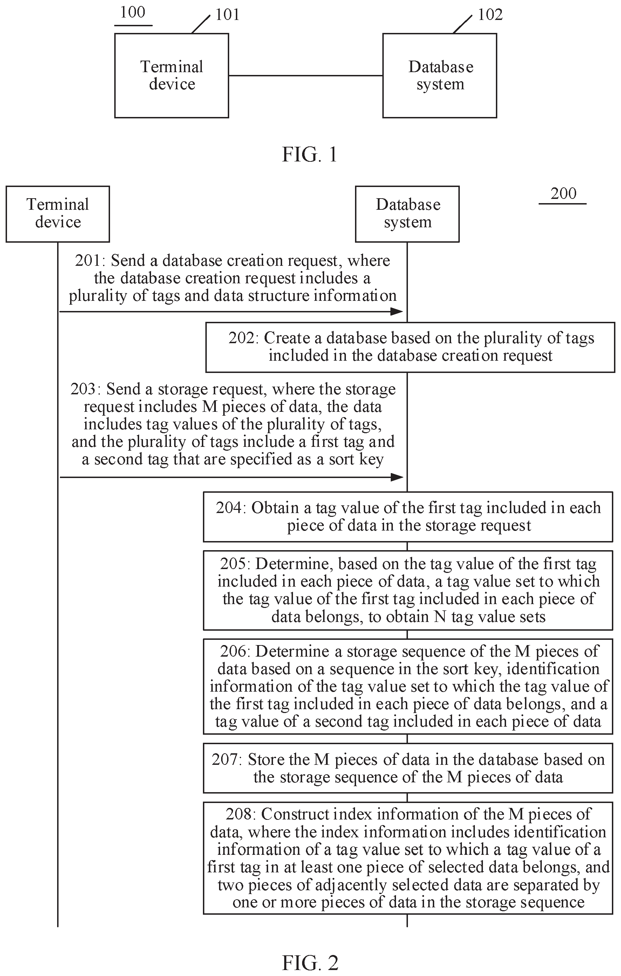

Refer to FIG. 1. An embodiment of this application provides a network architecture 100. The network architecture 100 includes a terminal device 101 and a database system 102. The terminal device 101 communicates with the database system 102.

Technical personnel may configure a plurality of tags and data structure information of a database on the terminal device 101, where the data structure information is used to specify at least two of the plurality of tags as a sort key.

In other words, the sort key includes a plurality of tags that need to be sorted, and the plurality of tags in the sort key are sequential. For example, the plurality of tags in the sort key include a first tag and a second tag, and the first tag ranks before the second tag in the sort key.

In some embodiments, the data structure information further includes quantization identification information, and the quantization identification information indicates the first tag. Optionally, the quantization identification information indicates that a tag value of the first tag needs to be quantized, to obtain identification information of a tag value set to which the tag value of the first tag belongs.

The terminal device 101 is configured to obtain the plurality of configured tags and the configured data structure information, and send a database creation request to the database system 102, where the database creation request includes the plurality of tags and the data structure information.

The database system 102 is configured to receive the database creation request, and create a database based on the plurality of tags included in the database creation request.

The database is used to store a plurality of pieces of data, and each piece of data includes tag values of the plurality of configured tags.

In some embodiments, the database may be a data table, and the data table stores the plurality of pieces of data in a column storage manner. Each piece of data in the plurality of pieces of data may be a row of data in the data table.

The data table is a data table including a plurality of columns, and the plurality of columns included in the data table correspond to the plurality of configured tags.

Optionally, the plurality of configured tags are in one-to-one correspondence with the plurality of columns, and for each of the plurality of configured tags, a column corresponding to the tag is used to store one or more tag values that belong to the tag.

In some embodiments, the database may be a file system, and the database may use a file to store the plurality of pieces of data.

In some embodiments, the terminal device 101 may further send a storage request to the database system 102. The storage request includes a plurality of pieces of to-be-stored data. The database system 102 receives the storage request, and stores the plurality of pieces of data in the database.

In some embodiments, the data structure information defines a sort key, and the sort key includes a plurality of tags that need to be sorted. In this way, multi-level sorting may be performed based on a sequence of the plurality of tags that is defined by the sort key. After receiving the storage request, the database system 102 performs multi-level sorting on the plurality of pieces of data based on a tag value of each of the plurality of tags that need to be sorted and that are included in each of the plurality of pieces of data, to obtain a storage sequence of the plurality of pieces of data. The plurality of pieces of data are stored in the database based on the storage sequence of the plurality of pieces of data.

That the data structure information specifies a tag as the sort key means that a tag value of the tag needs to be ranked. Specifying tags as the sort key means that after receiving the plurality of pieces of to-be-stored data, the storage sequence of the plurality of pieces of data is determined based on tag values of the tags that are used as the sort key. During implementation, because one piece of data is a whole, sorting tag values of tags used as the sort key is actually sorting the plurality of pieces of data as a whole. When the sort key has a plurality of tags, a tag value of a specific tag that is first used to sort the plurality of pieces of data is determined based on a sequence of the plurality of tags in the sort key.

When the sort key has a plurality of tags that need to be sorted, multi-level sorting is performed based on a sequence of the plurality of tags. For example, the first tag ranks before the second tag in the sort key. After the database system 102 receives the plurality of pieces of to-be-stored data, the database system 102 performs sorting based on the tag value of the first tag included in each piece of data, to obtain the storage sequence of the plurality of pieces of data, and after the sorting, classifies a plurality of pieces of data including the same tag value of the first tag into one class. Then, when sorting is performed based on a tag value of the second tag included in each piece of data, sorting is performed on the plurality of pieces of data classified into one class (the plurality of pieces of data including the same tag value of the first tag), and a relative sequence between different classes does not change. Therefore, when multi-level sorting is performed, a tag value of a 1^{st} sort key is used for level-1 sorting, and then a tag value of a 2^{nd} sort key is used for level-2 sorting. Level-2 sorting is to sort data in a class obtained through level-1 sorting.

For example, a quantity of tags that need to be sorted and that are included in the sort key may be n, where n is an integer greater than or equal to 1.

For a 1^{st} tag in the n tags, the database system 102 performs level-1 sorting on all the data based on tag values of 1^{st} tags that need to be sorted and that are included in the plurality of pieces of data, to classify data that includes the same tag value of the 1^{st} tag into one class; for a 2^{nd} tag in the n tags, the database system 102 performs, based on tag values of 2^{nd} tags that need to be sorted and that are included in all the data, level-2 sorting on all data in each class obtained through level-1 sorting, to classify, into one class, data that includes the same tag value of the 2^{nd} tag and that is in the same class of data obtained through level-1 sorting and classification; ...; and for an n^{th} tag in the n tags, the database system 102 performs, based on tag values of n^{th} tags that need to be sorted and that are included in all the data, level-n sorting on all data in each class obtained through level-(n-1) sorting, to classify, into one class, data that includes the same tag value of the n^{th} tag and that is in the same class of data obtained through level-(n-1) sorting and classification, and obtain a storage sequence of the plurality of pieces of data.

In some embodiments, the database creation request further includes identification information of the database (for example, a name of the database).

For example, the database system 102 receives a database creation request shown below:

```
          Create Table information (Operator, Direction, Address, Time, Bps)
          SORTKEY Operator, Time, Address.
```

The database creation request includes five tags in the database "information", and the five tags are in one-to-one correspondence with five columns in the database "information". In the database "information", a 1^{st} column is used to store a tag value that belongs to the tag "Operator", a 2^{nd} column is used to store a tag value that belongs to the tag "Direction", a 3^{rd} column is used to store a tag value that belongs to the tag "Address", a 4^{th} column is used to store a tag value that belongs to the tag "Time", and a 5^{th} column is used to store a tag value that belongs to the tag "Bps".

The database creation request further includes data structure information. The data structure information defines three tags that need to be sorted, and a sorting sequence of the three tags is Operator, Time, and Address. In other words, for a plurality of pieces of data to be stored in the database, when the plurality of pieces of data are sorted, level-1 sorting is first performed on all the data based on a tag value of the tag "Operator" included in each piece of data. Then, level-2 sorting is performed based on tag values of tags "Time" included in all sorted data. Finally, level-3 sorting is performed based on tag values of tags "Address" included in all sorted data, to obtain a storage sequence of all the data. Each piece of data is stored in the database based on the storage sequence of all the data.

For example, the database system 102 receives the following storage request, where the storage request includes 20 pieces of data.
Insert into information (Operator, Direction, Address, Time, Bps) Value (
operator 1, out, 192.163.13.1, 1:03:53, 60;
operator 1, out, 192.163.13.5, 1:03:52, 40;
operator 1, out, 192.163.13.2, 1:03:55, 59;
operator 1, out, 192.163.13.1, 1:03:56, 69;
operator 2, out, 192.163.13.4, 7:02:40, 70;
operator 2, out, 192.163.16.4, 7:22:40, 30;
operator 1, in, 192.163.13.2, 9:03:49, 102;
operator 1, in, 192.163.12.2, 9:03:49, 122;
operator 1, out, 192.163.13.2, 1:03:50, 160;
operator 1, out, 192.163.23.2, 1:03:50, 60;
operator 2, out, 192.163.13.4, 3:02:52, 59;
operator 2, out, 192.163.11.4, 3:02:52, 39;
operator 2, out, 192.163.13.5, 7:02:29, 80;
operator 2, out, 192.163.33.5, 7:02:39, 85;
operator 1, out, 192.163.13.1, 1:03:43, 20;
operator 1, out, 192.163.19.1, 1:03:43, 30;
operator 1, in, 192.163.13.1, 1:03:42, 60;
operator 1, in, 192.163.113.1, 1:03:42, 20;
operator 2, out, 192.163.13.4, 2:02:45, 90; and
operator 2, out, 192.163.33.4, 2:02:45, 80;
   ).

The database system 102 first performs level-1 sorting on the 20 pieces of data based on a tag value of "Operator" included in each of the 20 pieces of data, to obtain the following result. When level-1 sorting is performed, data including the same tag value of "Operator" is clustered together to form a class. As shown in the following, during level-1 sorting, 12 pieces of data including operator 1 are clustered together to form a class 1, and eight pieces of data including operator 2 are clustered together to form a class 2:
operator 1, out, 192.163.13.1, 1:03:53, 60;
operator 1, out, 192.163.13.5, 1:03:52, 40;
operator 1, out, 192.163.13.2, 1:03:55, 59;
operator 1, out, 192.163.13.1, 1:03:56, 69;
operator 1, in, 192.163.13.2, 9:03:49, 102;
operator 1, in, 192.163.12.2, 9:03:49, 122;
operator 1, out, 192.163.13.2, 1:03:50, 160;
operator 1, out, 192.163.23.2, 1:03:50, 60;
operator 1, out, 192.163.13.1, 1:03:43, 20;
operator 1, out, 192.163.19.1, 1:03:43, 30;
operator 1, in, 192.163.13.1, 1:03:42, 60;
operator 1, in, 192.163.113.1, 1:03:42, 20;
operator 2, out, 192.163.13.4, 7:02:40, 70;
operator 2, out, 192.163.16.4, 7:22:40, 30;
operator 2, out, 192.163.13.4, 3:02:52, 59;
operator 2, out, 192.163.11.4, 3:02:52, 39;
operator 2, out, 192.163.13.5, 7:02:29, 80;
operator 2, out, 192.163.33.5, 7:02:39, 85;
operator 2, out, 192.163.13.4, 2:02:45, 90; and
operator 2, out, 192.163.33.4, 2:02:45, 80.

The database system 102 performs level-2 sorting on the 20 pieces of data based on a tag value of "Time" included in each of the 20 pieces of data. When level-2 sorting is performed, a relative sequence between the class 1 and the class 2 remains unchanged, but level-2 sorting is performed on the 12 pieces of data based on the tag value of "Time" included in each of the 12 pieces of data in the class 1. To be specific, two pieces of data including "1:03:42" are clustered to form a class 11, two pieces of data including "1:03:43" are clustered to form a class 12, two pieces of data including "1:03:50" are clustered to form a class 13, one piece of data including "1:03:52" is clustered to form a class 14, one piece of data including "1:03:53" is clustered to form a class 15, two pieces of data including "1:03:55" are clustered to form a class 16, two pieces of data including "1:03:56" are clustered to form a class 17, and two pieces of data including "9:03:49" are clustered to form a class 18.

Level-2 sorting is performed on the eight pieces of data based on the tag value of "Time" included in each of the eight pieces of data in the class 2. To be specific, two pieces of data including "2:02:45" are clustered to form a class 21, two pieces of data including "3:02:52" are clustered to form a class 22, one piece of data including "7:02:29" is clustered to form a class 23, one piece of data including "7:02:39" is clustered to form a class 24, one piece of data including "7:02:40" is clustered to form a class 25, and one piece of data including "7:22:40" is clustered to form a class 26, to obtain the following result:
operator 1, in, 192.163.13.1, 1:03:42, 60;
operator 1, in, 192.163.113.1, 1:03:42, 20;
operator 1, out, 192.163.13.1, 1:03:43, 20;
operator 1, out, 192.163.19.1, 1:03:43, 30;
operator 1, out, 192.163.13.2, 1:03:50, 160;
operator 1, out, 192.163.23.2, 1:03:50, 60;
operator 1, out, 192.163.13.5, 1:03:52, 40;
operator 1, out, 192.163.13.1, 1:03:53, 60;
operator 1, out, 192.163.13.2, 1:03:55, 59;
operator 1, out, 192.163.13.1, 1:03:56, 69;
operator 1, in, 192.163.13.2, 9:03:49, 102;
operator 1, in, 192.163.12.2, 9:03:49, 122;
operator 2, out, 192.163.13.4, 2:02:45, 90;
operator 2, out, 192.163.33.4, 2:02:45, 80;
operator 2, out, 192.163.13.4, 3:02:52, 59;
operator 2, out, 192.163.11.4, 3:02:52, 39;
operator 2, out, 192.163.13.5, 7:02:29, 80;
operator 2, out, 192.163.33.5, 7:02:39, 85;
operator 2, out, 192.163.13.4, 7:02:40, 70; and
operator 2, out, 192.163.16.4, 7:22:40, 30.

The database system 102 performs level-3 sorting on the 20 pieces of data based on a tag value of "Address" included in each of the 20 pieces of data, and when level-3 sorting is performed, a relative sequence between the class 11, the class 12, the class 13, the class 14, the class 15, the class 16, the class 17, the class 18, the class 21, the class 22, the class 23, the class 24, the class 25, and the class 26 remains unchanged. When level-3 sorting is performed, based on tag values of "Address" included in the two pieces of data in the class 11, level-3 sorting is performed on the two pieces of data; based on tag values of "Address" included in the two pieces of data in the class 12, level-3 sorting is performed on the two pieces of data; based on tag values of "Address" included in the two pieces of data in the class 13, level-3 sorting is performed on the two pieces of data; based on tag values of "Address" included in the two pieces of data in the class 16, level-3 sorting is performed on the two pieces of data; based on tag values of "Address" included in the two pieces of data in the class 17, level-3 sorting is performed on the two pieces of data; based on tag values of "Address" included in the two pieces of data in the class 18, level-3 sorting is performed on the two pieces of data; based on tag values of "Address" included in the two pieces of data in the class 21, level-3 sorting is performed on the two pieces of data; and based on tag values of "Address" included in the two pieces of data in the class 22, level-3 sorting is performed on the two pieces of data. After level-3 sorting is performed, a storage sequence of the 20 pieces of data is obtained as follows:
operator 1, in, 192.163.13.1, 1:03:42, 60;
operator 1, in, 192.163.113.1, 1:03:42, 20;
operator 1, out, 192.163.13.1, 1:03:43, 20;
operator 1, out, 192.163.19.1, 1:03:43, 30;
operator 1, out, 192.163.13.2, 1:03:50, 160;
operator 1, out, 192.163.23.2, 1:03:50, 60;
operator 1, out, 192.163.13.5, 1:03:52, 40;
operator 1, out, 192.163.13.1, 1:03:53, 60;
operator 1, out, 192.163.13.2, 1:03:55, 59;
operator 1, out, 192.163.13.1, 1:03:56, 69;
operator 1, in, 192.163.12.2, 9:03:49, 122;
operator 1, in, 192.163.13.2, 9:03:49, 102;
operator 2, out, 192.163.13.4, 2:02:45, 90;
operator 2, out, 192.163.33.4, 2:02:45, 80;
operator 2, out, 192.163.11.4, 3:02:52, 39;
operator 2, out, 192.163.13.4, 3:02:52, 59;
operator 2, out, 192.163.13.5, 7:02:29, 80;
operator 2, out, 192.163.33.5, 7:02:39, 85;
operator 2, out, 192.163.13.4, 7:02:40, 70; and
operator 2, out, 192.163.16.4, 7:22:40, 30.

The database system 102 stores, based on the storage sequence of the 20 pieces of data, the 20 pieces of data in database "information" shown in Table 1.

**Table 1**

| Sequence number | Operator | Direction | Address | Time | Bps |
|---|---|---|---|---|---|
| 1 | Operator 1 | in | 192.163.13.1 | 1:03:42 | 60 |
| 2 | Operator 1 | in | 192.163.113.1 | 1:03:42 | 20 |
| 3 | Operator 1 | out | 192.163.13.1 | 1:03:43 | 20 |
| 4 | Operator 1 | out | 192.163.19.1 | 1:03:43 | 30 |
| 5 | Operator 1 | out | 192.163.13.2 | 1:03:50 | 160 |
| 6 | Operator 1 | out | 192.163.23.2 | 1:03:50 | 60 |
| 7 | Operator 1 | out | 192.163.13.5 | 1:03:52 | 40 |
| 8 | Operator 1 | out | 192.163.13.1 | 1:03:53 | 60 |
| 9 | Operator 1 | out | 192.163.13.2 | 1:03:55 | 59 |
| 10 | Operator 1 | out | 192.163.13.1 | 1:03:56 | 69 |
| 11 | Operator 1 | in | 192.163.12.2 | 9:03:49 | 122 |
| 12 | Operator 1 | in | 192.163.13.2 | 9:03:49 | 102 |
| 13 | Operator 2 | out | 192.163.13.4 | 2:02:45 | 90 |
| 14 | Operator 2 | out | 192.163.33.4 | 2:02:45 | 80 |
| 15 | Operator 2 | out | 192.163.11.4 | 3:02:52 | 39 |
| 16 | Operator 2 | out | 192.163.13.4 | 3:02:52 | 59 |
| 17 | Operator 2 | out | 192.163.13.5 | 7:02:29 | 80 |
| 18 | Operator 2 | out | 192.163.33.5 | 7:02:39 | 85 |
| 19 | Operator 2 | out | 192.163.13.4 | 7:02:40 | 70 |
| 20 | Operator 2 | out | 192.163.16.4 | 7:22:40 | 30 |

For some tags in the database, the tag is a tag having a tag value whose cardinality meets a high-cardinality condition. A tag having a tag value whose cardinality meets the high-cardinality condition means that the tag has a large quantity of deduplicated tag values. Usually, a quantity of deduplicated tag values of the tag may exceed a quantity threshold. For example, there may be thousands, tens of thousands, millions, tens of millions, or hundreds of millions of deduplicated tag values of the tag. A high-cardinality column in the database is a column of tag values whose cardinality meets the high-cardinality condition and that are in the database.

If there are a plurality of sort keys, multi-level sorting is needed. In this case, when there is a high-cardinality column before a specific column, first performing upper-level sorting on data based on tag values in the high-cardinality column causes poor orderliness of a column subsequently sorted. For the first tag and the second tag, the first tag ranks before the second tag in the sort key, and a column of tag values corresponding to the first tag is a high-cardinality column. Because level-1 sorting is first performed on data based on the tag values in the high-cardinality column, and then level-2 sorting is performed based on a column of tag values corresponding to the second tag, orderliness of the column of tag values corresponding to the second tag is poor.

For example, for the database shown in Table 1, for the tag "Address" and the tag "Time" in the database, deduplicated tag values of the tag "Address" are a large quantity of addresses, and there may be hundreds of millions or hundreds of billions of different addresses; and deduplicated tag values of the tag "Time" are a large quantity of timestamps, and there may be hundreds of millions or hundreds of billions of different timestamps. All the data is sorted based on a timestamp and an address in each piece of data. Refer to Table 1. For a 1^{st} piece of data whose sequence number is 1, a 3^{rd} piece of data whose sequence number is 3, a 5^{th} piece of data whose sequence number is 5, a 7^{th} piece of data whose sequence number is 7, a 9^{th} piece of data whose sequence number is 9, a 10^{th} piece of data whose sequence number is 10, and a 12^{th} piece of data whose sequence number is 12, all these data is addresses in a 192.163.13 network segment, but these data is stored in the data table shown in Table 1 in a scattered manner. For a 13^{th} piece of data whose sequence number is 13, a 16^{th} piece of data whose sequence number is 16, a 17^{th} piece of data whose sequence number is 17, and a 19^{th} piece of data whose sequence number is 19, all these data is also addresses in the 192.163.13 network segment, but these data is stored in the database shown in Table 1 in a scattered manner. Consequently, local orderliness of addresses corresponding to tags "Address" included in all sorted data is poor. In this case, if data of consecutive addresses in the 192.163.13 network segment needs to be queried for, a data scanning range is large, which increases query difficulty and reduces query efficiency.

To improve local orderliness of the data stored in the database, the data is stored in the database by using any one of the following embodiments. Then, the database is processed, so that efficiency of processing the database can be improved. For example, data is queried for from the database, so that query efficiency can be improved.

Refer to FIG. 2. An embodiment of this application provides a data storage method 200. The method 200 is applied to the network architecture 100 shown in FIG. 1, and includes the following procedures.

Step 201: A terminal device sends a database creation request to a database system, where the database creation request includes a plurality of tags and data structure information, and the data structure information is used to specify at least two of the plurality of tags as a sort key.

The at least two tags include a first tag and a second tag, and the first tag ranks before the second tag in the sort key.

In some embodiments, the data structure information further includes quantization identification information, and the quantization identification information indicates the first tag. Optionally, the quantization identification information indicates that a tag value of the first tag needs to be quantized, to obtain identification information of a tag value set to which the tag value of the first tag belongs.

In some embodiments, a mark may be added to the first tag that is in the at least two tags and that needs to be quantized, and the quantization identification information includes the mark added to the first tag. Optionally, the mark may be a granularity of the tag value set to which the tag value of the first tag belongs, or the mark may be an automatic mark that is for automatically determining a granularity of the tag value set to which the tag value of the first tag belongs.

Optionally, the database creation request may further include identification information of the database. Optionally, the identification information of the database may include a name of the database and the like.

In some embodiments, the tag value set to which the tag value of the first tag belongs includes a plurality of tag values that belong to the first tag. For example, it is assumed that the first tag is a timestamp, and the granularity of the tag value set is one minute. For a timestamp 7:05:40, a tag value set to which the timestamp 7:05:40 belongs is a set of greater than or equal to 7:05:01 and less than or equal to 7:05:59. The timestamp 7:05:40 is quantized, and an obtained tag value set is a tag value set whose identification information may be "7:05". For a timestamp 7:06:25, a tag value set to which the timestamp 7:06:25 belongs is a set of greater than or equal to 7:06:01 and less than or equal to 7:06:59. The timestamp 7:06:25 is quantized, and an obtained tag value set is a tag value set whose identification information may be "7:06".

For another example, it is still assumed that the first tag is a timestamp, and the granularity of the tag value set is 10 minutes. For a timestamp 7:15:40, a tag value set to which the timestamp 7:15:40 belongs is a set of greater than or equal to 7:10:01 and less than or equal to 7:19:59. The timestamp 7:15:40 is quantized, and an obtained tag value set is a tag value set whose identification information may be "7:10". For a timestamp 7:25:25, a tag value set to which the timestamp 7:25:25 belongs is a set of greater than or equal to 7:20:01 and less than or equal to 7:29:59. The timestamp 7:25:25 is quantized, and an obtained tag value set is a tag value set whose identification information may be "7:20".

In some embodiments, the first tag indicated by the quantization identification information may include one or more tags.

In step 201, the terminal device may display a first editing interface, a user may input a database creation statement in the first editing interface, and the terminal device obtains the database creation statement from the first editing interface, and uses the database creation statement as the database creation request.

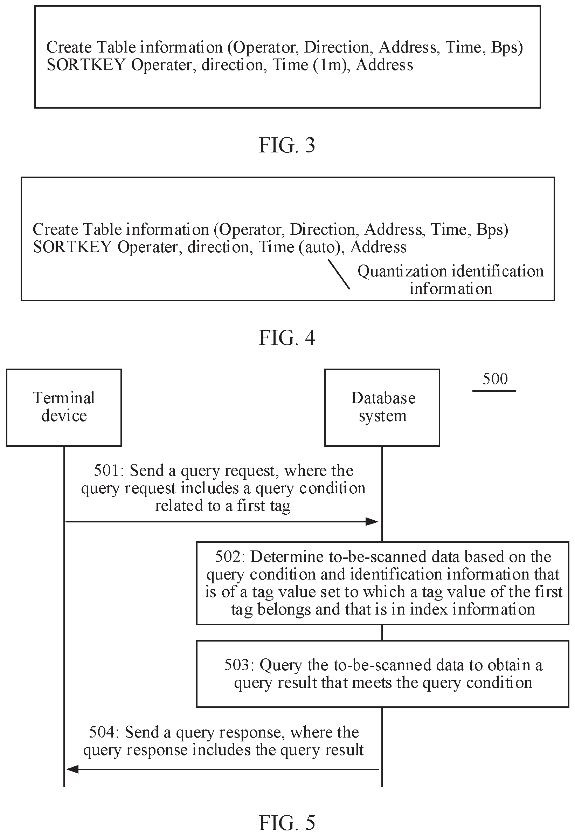

For example, the terminal device may display a first editing interface shown in FIG. 3, and the user may input the following database creation statement 1 in the first editing interface. The database creation statement 1 includes a database name "information", five tags, and data structure information. The five tags are "Operator", "Direction", "Address", "Time", and "Bps". The data structure information indicates that three tags that need to be sorted are a sort key, and a sequence of the three tags that need to be sorted is "Operator", "Time", and "Address". In an embodiment, the data structure information further includes quantization identification information. The quantization identification information may be a granularity "1m" that is of a tag value set and that is marked on a first tag "Time", and the quantization identification information indicates that the first tag that needs to be quantized is "Time". Therefore, the granularity "1m" not only indicates that a tag that needs to be quantized is "Time", but also indicates the granularity.

Database creation statement 1:

```
          Create Table information (Operator, Direction, Address, Time, Bps)
          SORTKEY Operator, direction, Time (1m), Address.
```

The terminal device may obtain the database creation statement 1 from the first editing interface shown in FIG. 3, and use the database creation statement 1 as the database create request.

For another example, refer to a first editing interface shown in FIG. 4. The user may input the following database creation statement 2 in the first editing interface. In comparison with the database creation statement 1 in the first editing interface shown in FIG. 3, in the database creation statement 2 in the first editing interface shown in FIG. 4, an automatic mark "auto" is marked on a first tag "Time", and the automatic mark "auto" indicates the database system to determine a granularity of a tag value set of the first tag "Time" based on a feature of a tag value of the first tag "Time".

Database creation statement 2:

```
          Create Table information (Operator, Direction, Address, Time, Bps)
          SORTKEY Operator, direction, Time (auto), Address.
```

For the first tag marked with the automatic mark, the database system may determine the granularity based on a feature of collected and stored data of the first tag. For example, the granularity may be determined based on a distribution feature of the collected and stored data of the first tag.

Step 202: The database system receives the database creation request, and creates the database based on the plurality of tags included in the database creation request.

In step 202, the database creation request includes the plurality of tags, and the database is created based on the plurality of tags. Optionally, when the database is a data table, the plurality of tags are in one-to-one correspondence with a plurality of columns included in the data table, and a column corresponding to each tag is used to store a tag value of each tag.

In some embodiments, each tag is column identification information of a column corresponding to each tag.

In some embodiments, the database creation request further includes the identification information of the database. After the database is created, the database system sets identification information of the database to the identification information that is of the database and that is included in the database creation request.

For example, the database system receives the database creation statement 1 or the database creation statement 2, and creates a database "information" based on the five tags included in the database creation statement 1 or the five tags included in the database creation statement 2. The database "information" includes five columns: a 1^{st} column corresponding to the tag "Operator", a 2^{nd} column corresponding to the tag "Direction", a 3^{rd} column corresponding to the tag "Address", a 4^{th} column corresponding to the tag "Time", and a 5^{th} column corresponding to the tag "Bps". "Operator", "Direction", "Address", "Time", and "Bps" are respectively column names of the five columns.

After the database is created, the user may store data in the database. A detailed implementation process is as follows.

Step 203: The terminal device sends a storage request to the database system, where the storage request includes M pieces of data, each piece of data includes tag values of the plurality of tags, the plurality of tags include the first tag and the second tag that are specified as the sort key, the first tag ranks before the second tag in the sort key, and M is an integer greater than 1.

In some embodiments, the storage request may be a data insertion statement.

The user may input the data insertion statement on a second editing interface displayed by the terminal device. The data insertion statement includes the identification information of the database and the M pieces of data. The terminal device obtains the data insertion statement from the second editing interface, and sends the data insertion statement to the database system.

For example, the user may input the data insertion statement on the second editing interface displayed by the terminal device, and the data insertion statement is shown below by using an example.

An example of the data insertion statement:
Insert into information (Operator, Direction, Address, Time, Bps) Value (
data 1: operator 1, out, 192.163.13.1, 1:03:53, 60;
data 2: operator 1, out, 192.163.13.5, 1:03:52, 40;
data 3: operator 1, out, 192.163.13.2, 1:03:55, 59;
data 4: operator 1, out, 192.163.13.1, 1:03:56, 69;
data 5: operator 2, out, 192.163.13.4, 7:02:40, 70;
data 6: operator 2, out, 192.163.16.4, 7:22:40, 30;
data 7: operator 1, in, 192.163.13.2, 9:03:49, 102;
data 8: operator 1, in, 192.163.12.2, 9:03:49, 122;
data 9: operator 1, out, 192.163.13.2, 1:03:50, 160;
data 10: operator 1, out, 192.163.23.2, 1:03:50, 60;
data 11: operator 2, out, 192.163.13.4, 3:02:52, 59;
data 12: operator 2, out, 192.163.11.4, 3:02:52, 39;
data 13: operator 2, out, 192.163.13.5, 7:02:29, 80;
data 14: operator 2, out, 192.163.33.5, 7:02:39, 85;
data 15: operator 1, out, 192.163.13.1, 1:03:43, 20;
data 16: operator 1, out, 192.163.19.1, 1:03:43, 30;
data 17: operator 1, in, 192.163.13.1, 1:03:42, 60;
data 18: operator 1, in, 192.163.113.1, 1:03:42, 20;
data 19: operator 2, out, 192.163.13.4, 2:02:45, 90; and
data 20: operator 2, out, 192.163.33.4, 2:02:45, 80;
   ).

The data insertion statement includes identification information "information" of the database and 20 pieces of data (for ease of description, in the example of the data insertion statement, the 20 pieces of data are referred to as data 1, 2, 3, 4, 5, 6, 7, 8, 9, 10, 11, 12, 13, 14, 15, 16, 17, 18, 19, and 20), that is, M=20. The terminal device obtains the data insertion statement from the second editing interface, uses the data insertion statement as the storage request, and sends the storage request to the database system.

Step 204: The database system receives the storage request, and obtains a tag value of the first tag included in each piece of data in the storage request.

In step 204, for each piece of data included in the storage request, the tag value that belongs to the first tag in the piece of data is determined, to obtain the tag value of the first tag included in the piece of data.

The first tag is a tag indicated by the quantization identification information. The database system determines the first tag based on the quantization identification information, and determines the tag value that belongs to the first tag in the piece of data, to obtain the tag value of the first tag included in the piece of data; or determines the first tag that needs to be quantized, where the first tag is a tag having a tag whose cardinality meets a high-cardinality condition in the plurality of tags, and determines the tag value that belongs to the first tag in the pieces of data, to obtain the tag value of the first tag included in the pieces of data.

In some embodiments, for the first tag that needs to be quantized, the database system may further collect statistics on frequency of using the first tag as a filter condition in a previously received query request, and if the frequency is high, to be specific, the frequency exceeds a frequency threshold, the first tag may be used as the tag that needs to be quantized.

For example, the database system receives the data insertion statement in the foregoing example, where the data insertion statement includes the data 1, 2, 3, 4, 5, 6, 7, 8, 9, 10, 11, 12, 13, 14, 15, 16, 17, 18, 19, and 20, and the first tag indicated by the quantization identification information is "Time".

For the data 1, a tag value "1:03:53" of the first tag "Time" included in the data 1 is obtained; for the data 2, a tag value "1:03:52" of the first tag "Time" included in the data 2 is obtained; for the data 3, a tag value "1:03:55" of the first tag "Time" included in the data 3 is obtained; ...; and for the data 20, a tag value "2:02:45" of the first tag "Time" included in the data 20 is obtained.

Step 205: The database system determines, based on the tag value of the first tag included in each piece of data, the tag value set to which the tag value of the first tag included in each piece of data belongs, to obtain N tag value sets, where N is an integer greater than or equal to 1 and less than M.

In step 205, it is determined, based on the tag value of the first tag included in each piece of data and the granularity of the tag value set of the first tag, that the tag of the first tag included in each piece of data belongs to the tag value set.

In some embodiments, the granularity of the tag value set of the first tag may be a granularity indicated by the quantization identification information.

In some embodiments, the granularity of the tag value set of the first tag may be a granularity determined based on a feature of the tag value of the first tag.

In some embodiments, the database system may have a plurality of quantization methods. A corresponding quantization method may be selected based on the first tag and the granularity, and the tag of the first tag included in each piece of data is quantized by using the quantization method, to obtain that the tag value of the first tag included in each piece of data belongs to the tag value set.

For example, it is assumed that a tag value of the first tag that needs to be quantized is a timestamp 7:05:40. If the first tag is a timestamp "Time" and a granularity is 1 minute, the database system may select a corresponding quantization method based on the first tag "Time" and the granularity "1 minute", and a tag value set obtained by quantizing the timestamp 7:05:40 by using the quantization method is "7:05". It is assumed that a tag value of the first tag that needs to be quantized is a timestamp 7:15:40. If the first tag is a timestamp "Time" and a granularity is 10 minutes, the database system may select a corresponding quantization method based on the first tag "Time" and the granularity "10 minutes", and a tag value set obtained by quantizing the timestamp 7:15:40 by using the quantization method is "7:10".

For another example, it is assumed that a tag value of the first tag that needs to be quantized is an address 192.168.13.4. If the first tag is an address "Address" and a granularity is a subnet mask of 255.255.255.0, the database system may select a corresponding quantization method based on the first tag "Address" and the subnet mask, and a tag value set obtained by performing mask processing on the address 192.168.13.4 by using the quantization method is "192.168.13".

A process of quantizing the tag value of the first tag is to divide an entire amplitude of the first tag into a set of limited small amplitudes (quantization intervals), classify sample values within a specific interval into a class, and assign a same quantized value.

Therefore, in step 205, the database system classifies all tag values of the first tag into intervals, classifies tag values within a same interval into a tag value set, and assigns a value to the tag value set to obtain identification information of the set. For the tag value of the first tag included in each piece of data, the database system may determine, from tag value sets obtained through division, a tag value set to which the tag value belongs, to obtain identification information of the tag value set.

For example, it is assumed that the first tag is a timestamp, and a granularity of the tag value set is one minute. An entire amplitude of the timestamp is divided into a plurality of intervals to obtain a plurality of tag value sets, and identification information of the plurality of tag value sets is obtained by assigning values. The identification information of the plurality of tag value sets obtained by assigning values includes 7:01, 7:02, 7:03, 7:04, 7:05, and the like. For the timestamp 7:05:40, the timestamp 7:05:40 is quantized, to obtain that a tag value set whose identification information is "7:05" includes the timestamp 7:05:40, and a tag value set obtained by quantizing the timestamp 7:05:40 is the tag value set whose identification information is "7:05".

In some embodiments, there may be a plurality of first tags that need to be quantized. For each piece of data, a tag value set to which a tag value of each first tag included in the data belongs is determined based on the tag value of each first tag included in the data and a granularity corresponding to each first tag.

For example, it is assumed that the first tag is "Time". In the foregoing data 1, 2, 3, 4, 5, 6, 7, 8, 9, 10, 11, 12, 13, 14, 15, 16, 17, 18, 19, and 20, the tag value corresponding to the first tag "Time" is a timestamp, and a feature of the timestamp is that seconds in the timestamp constantly change. Therefore, it is determined that the granularity of the tag value set of the first tag "Time" is 1m.

It is assumed that the granularity of the tag value set of the first tag "Time" is 1m. For the foregoing data 1, a tag value set "1:03" to which a tag value "1:03:53" of the first tag "Time" included in the data 1 belongs is determined based on the tag value "1:03:53" of the first tag "Time" included in the data 1 and the granularity "1m" of the tag value set of the first tag "Time".

For the foregoing data 2, the tag value set "1:03" to which a tag value "1:03:52" of the first tag "Time" included in the data 2 belongs is determined based on the tag value "1:03:52" of the first tag "Time" included in the data 2 and the granularity "1m" of the tag value set of the first tag "Time".

For the foregoing data 3, the tag value set "1:03" to which a tag value "1:03:55" of the first tag "Time" included in the data 3 belongs is determined based on the tag value "1:03:55" of the first tag "Time" included in the data 3 and the granularity "1m" of the tag value set of the first tag "Time".

For the foregoing data 4, the tag value set "1:03" to which a tag value "1:03:56" of the first tag "Time" included in the data 4 belongs is determined based on the tag value "1:03:56" of the first tag "Time" included in the data 4 and the granularity "1m" of the tag value set of the first tag "Time".

For the foregoing data 5, a tag value set "7:02" to which a tag value "7:02:40" of the first tag "Time" included in the data 5 belongs is determined based on the tag value "7:02:40" of the first tag "Time" included in the data 5 and the granularity "1m" of the tag value set of the first tag "Time".

For the foregoing data 6, a tag value set "7:22" to which a tag value "7:22:40" of the first tag "Time" included in the data 6 belongs is determined based on the tag value "7:22:40" of the first tag "Time" included in the data 6 and the granularity "1m" of the tag value set of the first tag "Time".

For the foregoing data 7, a tag value set "9:03" to which a tag value "9:03:49" of the first tag "Time" included in the data 7 belongs is determined based on a tag value "9:03:40" of the first tag "Time" included in the data 7 and the granularity "1m" of the tag value set of the first tag "Time".

For the foregoing data 8, the tag value set "9:03" to which a tag value "9:03:49" of the first tag "Time" included in the data 8 belongs is determined based on the tag value "9:03:49" of the first tag "Time" included in the data 8 and the granularity "1m" of the tag value set of the first tag "Time".

For the foregoing data 9, the tag value set "1:03" to which a tag value "1:03:50" of the first tag "Time" included in the data 9 belongs is determined based on the tag value "1:03:50" of the first tag "Time" included in the data 9 and the granularity "1m" of the tag value set of the first tag "Time".

For the foregoing data 10, the tag value set "1:03" to which a tag value "1:03:50" of the first tag "Time" included in the data 10 belongs is determined based on the tag value "1:03:50" of the first tag "Time" included in the data 10 and the granularity "1m" of the tag value set of the first tag "Time".

For the foregoing data 11, a tag value set "3:02" to which a tag value "3:02:52" of the first tag "Time" included in the data 11 belongs is determined based on the tag value "3:02:52" of the first tag "Time" included in the data 11 and the granularity "1m" of the tag value set of the first tag "Time".

For the foregoing data 12, the tag value set "3:02" to which a tag value "3:02:52" of the first tag "Time" included in the data 12 belongs is determined based on the tag value "3:02:52" of the first tag "Time" included in the data 12 and the granularity "1m" of the tag value set of the first tag "Time".

For the foregoing data 13, the tag value set "7:02" to which a tag value "7:02:29" of the first tag "Time" included in the data 13 belongs is determined based on the tag value "7:02:29" of the first tag "Time" included in the data 13 and the granularity "1m" of the tag value set of the first tag "Time".

For the foregoing data 14, the tag value set "7:02" to which a tag value "7:02:39" of the first tag "Time" included in the data 14 belongs is determined based on the tag value "7:02:39" of the first tag "Time" included in the data 14 and the granularity "1m" of the tag value set of the first tag "Time".

For the foregoing data 15, the tag value set "1:03" to which a tag value "1:03:43" of the first tag "Time" included in the data 15 belongs is determined based on the tag value "1:03:43" of the first tag "Time" included in the data 15 and the granularity "1m" of the tag value set of the first tag "Time".

For the foregoing data 16, the tag value set "1:03" to which a tag value "1:03:43" of the first tag "Time" included in the data 16 belongs is determined based on the tag value "1:03:43" of the first tag "Time" included in the data 16 and the granularity "1m" of the tag value set of the first tag "Time".

For the foregoing data 17, the tag value set "1:03" to which a tag value "1:03:42" of the first tag "Time" included in the data 17 belongs is determined based on the tag value "1:03:42" of the first tag "Time" included in the data 17 and the granularity "1m" of the tag value set of the first tag "Time".

For the foregoing data 18, the tag value set "1:03" to which a tag value "1:03:42" of the first tag "Time" included in the data 18 belongs is determined based on the tag value "1:03:42" of the first tag "Time" included in the data 18 and the granularity "1m" of the tag value set of the first tag "Time".

For the foregoing data 19, a tag value set "2:02" to which a tag value "2:02:45" of the first tag "Time" included in the data 19 belongs is determined based on the tag value "2:02:45" of the first tag "Time" included in the data 19 and the granularity "1m" of the tag value set of the first tag "Time".

For the foregoing data 20, the tag value set "2:02" to which a tag value "2:02:45" of the first tag "Time" included in the data 20 belongs is determined based on the tag value "2:02:45" of the first tag "Time" included in the data 20 and the granularity "1m" of the tag value set of the first tag "Time".

As shown below, the tag value set to which the tag of the first tag included in each of the 20 pieces of data belongs is shown below:
data 1: operator 1, out, 192.163.13.1, 1:03:53, 60; 1:03;
data 2: operator 1, out, 192.163.13.5, 1:03:52, 40; 1:03;
data 3: operator 1, out, 192.163.13.2, 1:03:55, 59, 1:03;
data 4: operator 1, out, 192.163.13.1, 1:03:56, 69; 1:03;
data 5: operator 2, out, 192.163.13.4, 7:02:40, 70; 7:02;
data 6: operator 2, out, 192.163.16.4, 7:22:40, 30; 7:22;
data 7: operator 1, in, 192.163.13.2, 9:03:49, 102; 9:03;
data 8: operator 1, in, 192.163.12.2, 9:03:49, 122; 9:03;
data 9: operator 1, out, 192.163.13.2, 1:03:50, 160; 1:03;
data 10: operator 1, out, 192.163.23.2, 1:03:50, 60; 1:03;
data 11: operator 2, out, 192.163.13.4, 3:02:52, 59, 3:02;
data 12: operator 2, out, 192.163.11.4, 3:02:52, 39, 3:02;
data 13: operator 2, out, 192.163.13.5, 7:02:29, 80, 7:02;
data 14: operator 2, out, 192.163.33.5, 7:02:39, 85, 7:02;
data 15: operator 1, out, 192.163.13.1, 1:03:43, 20; 1:03;
data 16: operator 1, out, 192.163.19.1, 1:03:43, 30; 1:03;
data 17: operator 1, in, 192.163.13.1, 1:03:42, 60; 1:03;
data 18: operator 1, in, 192.163.113.1, 1:03:42, 20; 1:03;
data 19: operator 2, out, 192.163.13.4, 2:02:45, 90; 2:02; and
data 20: operator 2, out, 192.163.33.4, 2:02:45, 80; 2:02.

Step 206: The database system determines a storage sequence of the M pieces of data based on a sequence in the sort key, identification information of the tag value set to which the tag value of the first tag included in each piece of data belongs, and a tag value of the second tag included in each piece of data.

In step 206, the data structure information defines at least two tags that need to be sorted. If the at least two tags rank before a tag of the first tag in the sort key, each piece of data is ranked based on a tag value of the tag included in each piece of data. Then, each piece of ranked data is ranked based on the identification information of the tag value set to which the tag value of a first tag value included in each piece of data belongs. Then, each piece of ranked data is ranked based on the tag value of the second tag included in each piece of data, to obtain the storage sequence of the M pieces of data.

For example, the data structure information defines that the at least two tags that need to be sorted include tags "Operater", "Time", and "Address". For the foregoing 20 pieces of data, the tag "Operator" ranks before the tag "Time" in the sort key, and the database system performs level-1 sorting on the 20 pieces of data based on a tag value of the tag "Operater" included in each piece of data. When level-1 sorting is performed, 12 pieces of data including the operator 1 are clustered together to form a class 1, and eight pieces of data including the operator 2 are clustered together to form a class 2. An obtained sorting result is as follows:
data 1: operator 1, out, 192.163.13.1, 1:03:53, 60; 1:03;
data 2: operator 1, out, 192.163.13.5, 1:03:52, 40; 1:03;
data 3: operator 1, out, 192.163.13.2, 1:03:55, 59, 1:03;
data 4: operator 1, out, 192.163.13.1, 1:03:56, 69; 1:03;
data 7: operator 1, in, 192.163.13.2, 9:03:49, 102; 9:03;
data 8: operator 1, in, 192.163.12.2, 9:03:49, 122; 9:03;
data 9: operator 1, out, 192.163.13.2, 1:03:50, 160; 1:03;
data 10: operator 1, out, 192.163.23.2, 1:03:50, 60; 1:03;
data 15: operator 1, out, 192.163.13.1, 1:03:43, 20; 1:03;
data 16: operator 1, out, 192.163.19.1, 1:03:43, 30; 1:03;
data 17: operator 1, in, 192.163.13.1, 1:03:42, 60; 1:03;
data 18: operator 1, in, 192.163.113.1, 1:03:42, 20; 1:03;
data 5: operator 2, out, 192.163.13.4, 7:02:40, 70; 7:02;
data 6: operator 2, out, 192.163.16.4, 7:22:40, 30; 7:22;
data 11: operator 2, out, 192.163.13.4, 3:02:52, 59, 3:02;
data 12: operator 2, out, 192.163.11.4, 3:02:52, 39, 3:02;
data 13: operator 2, out, 192.163.13.5, 7:02:29, 80, 7:02;
data 14: operator 2, out, 192.163.33.5, 7:02:39, 85, 7:02;
data 19: operator 2, out, 192.163.13.4, 2:02:45, 90; 2:02; and
data 20: operator 2, out, 192.163.33.4, 2:02:45, 80; 2:02.

The tag "Time" ranks before the tag "Address" in the sort key, and the database system performs level-2 sorting on the 20 pieces of data based on the foregoing sorting result and identification information of a tag value set to which a tag value of the first tag "Time" included in each piece of data belongs. When level-2 sorting is performed, a relative sequence between the class 1 and the class 2 remains unchanged, but level-2 sorting is performed on the 12 pieces of data based on the identification information of the tag value set to which the tag value of "Time" included in each of the 12 pieces of data in the class 1 belongs. In other words, the data 1, 2, 3, 4, 9, 10, 15, 16, 17, and 18 that include the identification information "1:03" of the tag value set to which the tag value of "Time" belongs are clustered to form a class 11, and the data 7 and 8 that include the identification information "9:03" of the tag value set to which the tag value of "Time" belongs are clustered to form a class 12.

Level-2 sorting is performed on the eight pieces of data based on the identification information of the tag value set to which the tag value of "Time" included in each of the eight pieces of data in the class 2 belongs. In other words, the data 19 and 20 that include the identification information "2:02" of the tag value set to which the tag value of "Time" belongs are clustered to form a class 21, the data 11 and 12 that include the identification information "3:02" of the tag value set to which the tag value of "Time" belongs are clustered to form a class 22, the data 5, 13, and 14 that include the identification information "7:02" of the tag value set to which the tag value of "Time" belongs are clustered to form a class 23, and the data 6 that includes the identification information "7:22" of the tag value set to which the tag value of "Time" belongs is clustered to form a class 24. An obtained sorting result is as follows:
data 1: operator 1, out, 192.163.13.1, 1:03:53, 60; 1:03;
data 2: operator 1, out, 192.163.13.5, 1:03:52, 40; 1:03;
data 3: operator 1, out, 192.163.13.2, 1:03:55, 59, 1:03;
data 4: operator 1, out, 192.163.13.1, 1:03:56, 69; 1:03;
data 9: operator 1, out, 192.163.13.2, 1:03:50, 160; 1:03;
data 10: operator 1, out, 192.163.23.2, 1:03:50, 60; 1:03;
data 15: operator 1, out, 192.163.13.1, 1:03:43, 20; 1:03;
data 16: operator 1, out, 192.163.19.1, 1:03:43, 30; 1:03;
data 17: operator 1, in, 192.163.13.1, 1:03:42, 60; 1:03;
data 18: operator 1, in, 192.163.113.1, 1:03:42, 20; 1:03;
data 7: operator 1, in, 192.163.13.2, 9:03:49, 102; 9:03;
data 8: operator 1, in, 192.163.12.2, 9:03:49, 122; 9:03;
data 19: operator 2, out, 192.163.13.4, 2:02:45, 90; 2:02;
data 20: operator 2, out, 192.163.33.4, 2:02:45, 80; 2:02;
data 11: operator 2, out, 192.163.13.4, 3:02:52, 59, 3:02;
data 12: operator 2, out, 192.163.11.4, 3:02:52, 39, 3:02;
data 5: operator 2, out, 192.163.13.4, 7:02:40, 70; 7:02;
data 13: operator 2, out, 192.163.13.5, 7:02:29, 80, 7:02;
data 14: operator 2, out, 192.163.33.5, 7:02:39, 85, 7:02; and
data 6: operator 2, out, 192.163.16.4, 7:22:40, 30; 7:22.

Then, the database system performs level-3 sorting on the 20 pieces of data based on the foregoing sorting result and a tag value of the first tag "Address" included in each piece of data. When level-3 sorting is performed, a relative sequence between the class 11, the class 12, the class 21, the class 22, the class 23, and the class 24 remains unchanged. When level-3 sorting is performed, level-3 sorting is performed on 10 pieces of data based on tag values of "Address" included in the 10 pieces of data in the class 11, level-3 sorting is performed on two pieces of data based on tag values of "Address" included in the two pieces of data in the class 12, level-3 sorting is performed on two pieces of data based on tag values of "Address" included in the two pieces of data in the class 21, level-3 sorting is performed based on tag values of "Address" included in the two pieces of data in the class 22, and level-3 sorting is performed on three pieces of data based on tag values of "Address" included in the three pieces of data in the class 23. After level-3 sorting is performed, a storage sequence of the 20 pieces of data is obtained as follows:
data 1: operator 1, out, 192.163.13.1, 1:03:53, 60; 1:03;
data 4: operator 1, out, 192.163.13.1, 1:03:56, 69; 1:03;
data 15: operator 1, out, 192.163.13.1, 1:03:43, 20; 1:03;
data 17: operator 1, in, 192.163.13.1, 1:03:42, 60; 1:03;
data 3: operator 1, out, 192.163.13.2, 1:03:55, 59, 1:03;
data 9: operator 1, out, 192.163.13.2, 1:03:50, 160; 1:03;
data 2: operator 1, out, 192.163.13.5, 1:03:52, 40; 1:03;
data 16: operator 1, out, 192.163.19.1, 1:03:43, 30; 1:03;
data 10: operator 1, out, 192.163.23.2, 1:03:50, 60; 1:03;
data 18: operator 1, in, 192.163.113.1, 1:03:42, 20; 1:03;
data 8: operator 1, in, 192.163.12.2, 9:03:49, 122; 9:03;
data 7: operator 1, in, 192.163.13.2, 9:03:49, 102; 9:03;
data 19: operator 2, out, 192.163.13.4, 2:02:45, 90; 2:02;
data 20: operator 2, out, 192.163.33.4, 2:02:45, 80; 2:02;
data 12: operator 2, out, 192.163.11.4, 3:02:52, 39, 3:02;
data 11: operator 2, out, 192.163.13.4, 3:02:52, 59, 3:02;
data 5: operator 2, out, 192.163.13.4, 7:02:40, 70; 7:02;
data 13: operator 2, out, 192.163.13.5, 7:02:29, 80, 7:02;
data 14: operator 2, out, 192.163.33.5, 7:02:39, 85, 7:02; and
data 6: operator 2, out, 192.163.16.4, 7:22:40, 30; 7:22.

Step 207: The database system stores the M pieces of data in the database based on the storage sequence of the M pieces of data.

For example, the 20 pieces of data are stored in a database shown in Table 2 based on the storage sequence of the 20 pieces of data.

**Table 2**

| Sequence number | Data | Operator | Direction | Address | Time | Bps |
|---|---|---|---|---|---|---|
| 1 | Data 1 | Operator 1 | out | 192.163.13.1 | 1:03:53 | 60 |
| 2 | Data 4 | Operator 1 | out | 192.163.13.1 | 1:03:56 | 69 |
| 3 | Data 15 | Operator 1 | out | 192.163.13.1 | 1:03:43 | 20 |
| 4 | Data 17 | Operator 1 | in | 192.163.13.1 | 1:03:42 | 60 |
| 5 | Data 3 | Operator 1 | out | 192.163.13.2 | 1:03:55 | 59 |
| 6 | Data 9 | Operator 1 | out | 192.163.13.2 | 1:03:50 | 160 |
| 7 | Data 2 | Operator 1 | out | 192.163.13.5 | 1:03:52 | 40 |
| 8 | Data 16 | Operator 1 | out | 192.163.19.1 | 1:03:43 | 30 |
| 9 | Data 10 | Operator 1 | out | 192.163.23.2 | 1:03:50 | 60 |
| 10 | Data 18 | Operator 1 | in | 192.163.113.1 | 1:03:42 | 20 |
| 11 | Data 8 | Operator 1 | in | 192.163.12.2 | 9:03:49 | 122 |
| 12 | Data 7 | Operator 1 | in | 192.163.13.2 | 9:03:49 | 102 |
| 13 | Data 19 | Operator 2 | out | 192.163.13.4 | 2:02:45 | 90 |
| 14 | Data 20 | Operator 2 | out | 192.163.33.4 | 2:02:45 | 80 |
| 15 | Data 12 | Operator 2 | out | 192.163.11.4 | 3:02:52 | 39 |
| 16 | Data 11 | Operator 2 | out | 192.163.13.4 | 3:02:52 | 59 |
| 17 | Data 5 | Operator 2 | out | 192.163.13.4 | 7:02:40 | 70 |
| 18 | Data 13 | Operator 2 | out | 192.163.13.5 | 7:02:29 | 80 |
| 19 | Data 14 | Operator 2 | out | 192.163.33.5 | 7:02:39 | 85 |
| 20 | Data 6 | Operator 2 | out | 192.163.16.4 | 7:22:40 | 30 |

In comparison with the database 1, data of addresses that belong to a same network segment are aggregated together as much as possible in the database 2, and orderliness of addresses in the "address" column in the database 2 is better than that of addresses in the "address" column in the database 1.

Step 208: The database system constructs index information of the M pieces of data, where the index information includes identification information of a tag value set to which a tag value of a first tag in at least one piece of selected data belongs, and two pieces of adjacently selected data are separated by one or more pieces of data in the storage sequence.

Optionally, the at least one piece of selected data may include a 1^{st} piece of data and a last piece of data in the M pieces of data.

It is assumed that a quantity of the one or more pieces of separated data is x, where x is an integer greater than or equal to 1. In step 208, the database system selects at least one piece of data from the M pieces of data stored in the database, where two pieces of adjacently selected data are separated by x pieces of data.

For example, the database system selects the data 1, the data 17, the data 2, the data 18, the data 19, the data 11, and the data 6 from the 20 pieces of data stored in the database shown in Table 2, and any two pieces of adjacently selected data are separated by two pieces of data, that is, x=2.

In some embodiments, the constructed index information may be a correspondence between identification information of a tag value set, a tag value, and a storage location. In step 208, the database system correspondingly stores, in the correspondence between identification information of a tag value set, a tag value, and a storage location, the identification information of the tag value set to which the tag value of the first tag included in each piece of selected data belongs, a tag value of another tag included in each piece of selected data, and a storage location of each piece of selected data in the database, where the another tag includes a tag other than the first tag in the sort key.

For example, a storage location of the selected data 1 in the database shown in Table 2 is a sequence number 1, a storage location of the selected data 17 in the database shown in Table 2 is a sequence number 4, a storage location of the selected data 2 in the database shown in Table 2 is a sequence number 7, a storage location of the selected data 18 in the database shown in Table 2 is a sequence number 10, a storage location of the selected data 19 in the database shown in Table 2 is a sequence number 13, a storage location of the selected data 11 in the database shown in Table 2 is a sequence number 16, and a storage location of the selected data 11 in the database shown in Table 2 is a sequence number 19.

The database system stores the operator 1 included in the data 1, the identification information "1:03" of the tag value set, 192.163.13.1 included in the data 1, and the storage location "sequence number 1" in the correspondence between identification information of a tag value set, a tag value, and a storage location shown in Table 3.

The database system stores the operator 1 included in the data 17, the identification information "1:03" of the tag value set, 192.163.13.1 included in the data 17, and the storage location "sequence number 4" in the correspondence between identification information of a tag value set, a tag value, and a storage location shown in Table 3.

The database system stores the operator 1 included in the data 2, the identification information "1:03" of the tag value set, 192.163.13.5 included in the data 2, and the storage location "sequence number 7" in the correspondence between identification information of a tag value set, a tag value, and a storage location shown in Table 3.

The database system stores the operator 1 included in the data 18, the identification information "1:03" of the tag value set, 192.163.113.1 included in the data 18, and the storage location "sequence number 10" in the correspondence between identification information of a tag value set, a tag value, and a storage location shown in Table 3.

The database system stores the operator 2 included in the data 19, the identification information "2:02" of the tag value set, 192.163.13.4 included in the data 19, and the storage location "sequence number 13" in the correspondence between identification information of a tag value set, a tag value, and a storage location shown in Table 3.

The database system stores the operator 2 included in the data 11, the identification information "3:02" of the tag value set, 192.163.13.4 included in the data 11, and the storage location "sequence number 16" in the correspondence between identification information of a tag value set, a tag value, and a storage location shown in Table 3.

The database system stores the operator 2 included in the data 6, the identification information "7:22" of the tag value set, 192.163.16.4 included in the data 6, and the storage location "sequence number 19" in the correspondence between identification information of a tag value set, a tag value, and a storage location shown in Table 3.

**Table 3**

| Operator | Identification information of a tag value set of Time | Address | Storage location |
|---|---|---|---|
| Operator 1 | 1:03 | 192.163.13.1 | Sequence number 1 |
| Operator 1 | 1:03 | 192.163.13.1 | Sequence number 4 |
| Operator 1 | 1:03 | 192.163.13.5 | Sequence number 7 |
| Operator 1 | 1:03 | 192.163.113.1 | Sequence number 10 |
| Operator 2 | 2:02 | 192.163.13.4 | Sequence number 13 |
| Operator 2 | 3:02 | 192.163.13.4 | Sequence number 16 |
| Operator 2 | 7:02 | 192.163.33.5 | Sequence number 19 |

The first tag is a tag having a tag value whose cardinality meets the high-cardinality condition, a quantity of deduplicated tag values of the first tag is extremely large, and the first tag ranks before the second tag in the sort key. Therefore, that level-1 sorting is first performed based on the tag value of the first tag included in each piece of to-be-stored data and then level-2 sorting is performed based on the tag value of the second tag included in each piece of to-be-stored data reduces local orderliness of a column of tag values corresponding to the second tag in the database.

However, in this embodiment of this application, the tag value set to which the tag value of the first tag included in each piece of to-be-stored data belongs is determined, to obtain the identification information of the tag value set to which the tag value of the first tag included in each piece of data belongs, and a quantity of tag value sets is far less than a quantity of deduplicated tag values of the first tag. In this way, that level-1 sorting is performed based on the identification information of the tag value set to which the tag value of the first tag included in each piece of to-be-stored data belongs and then level-2 sorting is performed based on the tag value of the second tag included in each piece of to-be-stored data improves local orderliness of the column of tag values corresponding to the second tag in the database.

In this embodiment of this application, the database system receives the database creation request, where the database creation request includes the plurality of tags and the data structure information, and the data structure information is used to define the first tag and the second tag in the plurality of tags as the sort key. When receiving the storage request including the M pieces of data, the database system determines the tag value set to which the tag value of the first tag included in each piece of data belongs. The first tag may be a tag having a tag value whose cardinality is excessively large, and cardinality of the tag value set of the first tag is far less than the cardinality of the tag value of the first tag. The storage sequence of all the data is determined based on the sequence in the sort key, the identification information of the tag value set to which the tag value of the first tag included in each piece of data belongs, and the tag value of the second tag included in each piece of data. Each piece of data is stored based on the storage sequence of all the data, to increase local orderliness of the column of tag values corresponding to the second tag stored in the data table.

Refer to FIG. 5. An embodiment of this application provides a data query method 500. The method 500 is applied to the network architecture 100 shown in FIG. 1, and includes the following procedure.

Step 501: A terminal device sends a query request to a database system, where the query request includes a query condition related to a first tag.

The query condition includes one tag value of the first tag, or the query condition includes a tag value set of the first tag, and the tag value set of the first tag includes a plurality of tag values of the first tag. That is, the query condition includes at least one tag value of the first tag.

In some embodiments, the query request may further include a tag value of another tag.

In step 501, the terminal device may display a third editing interface, a user may input a data query statement in the third editing interface, and the terminal device obtains the data query statement from the third editing interface and uses the data query statement as the query request.

For example, it is assumed that the user inputs the following data query statement on the third editing interface displayed by the terminal device, where a query condition in the data query statement is Operator=operator 1, Time=1:03:56, and Address=192.163.13.1. The terminal device obtains the data query statement, uses the data query statement as the query request, and sends the query request to the database system.

Data query statement:

```
          Select from information
          Where Operator=operator 1, Time=1:03:56, and Address=192.163.13.1.
```

Step 502: The database system receives the query request, and determines to-be-scanned data based on the query condition and identification information that is of the tag value set to which the tag value of the first tag belongs and that is in index information.

In step 502, the to-be-scanned data may be determined by using the following operations 5021 and 5022.

5021: The database system receives the query request, and obtains at least one storage location from the index information based on identification information of a target tag value set in which at least one tag value of the first tag is located, where the at least one storage location includes a storage location of a 1^{st} piece of data in the to-be-scanned data and a storage location of a last piece of data in the to-be-scanned data.

In step 5021, the database system determines the target tag value set based on the at least one tag value of the first tag, where the target tag value set includes the at least one tag value; or determines a plurality of target tag value sets based on the at least one tag value of the first tag, where each target tag value set includes a part of the at least one tag value. Maximum identification information and minimum identification information are selected from the identification information of the determined target tag value set.

First data is selected from the index information, where identification information that is of the tag value set to which the tag value of the first tag belongs and that is included in the first data is less than or equal to the minimum identification information, but data that is in the index information and that is located before the first data does not include data in which the identification information of the tag value set to which the tag value of the first tag belongs is greater than or equal to the minimum identification information. Then, a first storage location corresponding to the first data is obtained from the index information, where the first storage location is a storage location of the 1^{st} piece of data in the to-be-scanned data.

Second data is selected from the index information, where identification information that is of the tag value set to which the tag value of the first tag belongs and that is included in the second data is greater than or equal to the maximum identification information, but data that is in the index information and that is located after the first data does not include data in which the identification information of the tag value set to which the tag value of the first tag belongs is less than or equal to the maximum identification information. Then, a second storage location corresponding to the second data is obtained from the index information, where the second storage location is a storage location of the last piece of data in the to-be-scanned data.

In some embodiments, if the storage request further includes a tag value of another tag, and the another tag is a tag other than the first tag in a sort key, the maximum identification information and the minimum identification information are selected from the identification information of the determined target tag value set, and a maximum tag value and a minimum tag value are selected from tag values of the another tag.

First data is selected from the index information, where identification information that is of the tag value set to which the tag value of the first tag belongs and that is included in the first data is less than or equal to the minimum identification information and the tag value of the another tag is less than or equal to the minimum tag value, but data that is in the index information and that is located before the first data does not include data in which the identification information of the tag value set to which the tag value of the first tag belongs is greater than or equal to the minimum identification information and data in which the tag value of the another tag is greater than or equal to the minimum tag value. Then, a first storage location corresponding to the first data is obtained from the index information, where the first storage location is a storage location of the 1^{st} piece of data in the to-be-scanned data.

Second data is selected from the index information, where identification information that is of the tag value set to which the tag value of the first tag belongs and that is included in the second data is greater than or equal to the maximum identification information and the tag value of the another tag is greater than or equal to the maximum tag value, but data that is in the index information and that is located after the first data does not include data in which the identification information of the tag value set to which the tag value of the first tag belongs is less than or equal to the maximum identification information and data in which the tag value of the another tag is less than or equal to the maximum tag value. Then, a second storage location corresponding to the second data is obtained from the index information, where the second storage location is a storage location of the last piece of data in the to-be-scanned data.

For example, the query condition in the storage request is Operator=operator 1, Time=1:03:56, and Address=192.163.13.1. It is determined, based on the tag value "1:03:56" of the first tag "Time", that the identification information of the target tag value set is "1:03". The first data and the second data are selected from the index information shown in Table 3 based on "Operator=operator 1", the identification information "1:03" of the target tag value set, and "Address=192.163.13.1". The first data includes the operator 1, the identification information "1:03" of the tag value set, the tag value "192.163.13.1" of Address, and the storage location, that is, the sequence number 1, of the first data. The first data includes the operator 1, the identification information "1:03" of the tag value set, the tag value "192.163.13.5" of Address, and the storage location, that is, the sequence number 7, of the second data.

5022: The database system determines to-be-scanned data in M pieces of data based on the at least one storage location.

The database system obtains, from the database, data between the first storage location and the second storage location as the to-be-scanned data.

For example, the first storage location is the sequence number 1, and the second storage location is the sequence number 7. The database system may obtain, from the database shown in Table 2, seven pieces of data between the sequence number 1 and the sequence number 7 as the to-be-scanned data, where the seven pieces of data are the data 1, the data 4, the data 15, the data 17, the data 3, the data 9, and the data 2.

Step 503: The database system queries the to-be-scanned data to obtain a query result that meets the query condition.

In step 503, the query condition includes one tag value of the first tag, or the query condition includes the tag value set of the first tag, and the tag value set of the first tag includes the plurality of tag values of the first tag. The database system selects target data from the to-be-scanned data based on the one or more tag values, where the tag value of the first tag included in the target data is the tag value or one of the plurality of tag values.

In some embodiments, if the storage request further includes a tag value of another tag, the target data is selected from the to-be-scanned data based on the tag value or the plurality of tag values and the tag value of the another tag, where the tag value of the another tag included in the target data and the tag value of the first tag included in the target data are the tag value or one of the plurality of tag values.

For example, the database system selects the target data from the data 1, the data 4, the data 15, the data 17, the data 3, the data 9, and the data 2 based on Operator=operator 1, Time=1:03:56, and Address=192.163.13.1, and the selected target data is the data 4. Because sorting and classification are performed in the database based on identification information of a tag value set to which a tag value of Time in each piece of data belongs, a plurality of pieces of data in which identification information of tag value sets to which tag values of Time belong are the same are classified into one class. For each piece of data classified into one class, ranking is performed based on a tag value of Address included in each piece of data, to improve local orderliness of each tag value corresponding to Address in the database, so that a range of the determined to-be-scanned data is reduced to only seven pieces of data, to improve query efficiency.

Step 504: The database system sends a query response to the terminal device, where the query response includes the query result.

The query result is the selected target data. After receiving the query response, the terminal device displays the target data included in the query response.

In this embodiment of this application, the database system receives the query request, where the query request includes the query condition, and the query condition indicates the at least one tag value of the first tag; obtains the at least one storage location from the index information based on the identification information of the target tag value set in which the at least one tag value is located; determines the to-be-scanned data in the database based on the at least one storage location, to narrow the range of to-be-scanned data that needs to be queried; and then selects, from the to-be-scanned data based on the at least one tag value, target data that includes a part or all of the at least one tag value, to improve efficiency of querying for the target data.

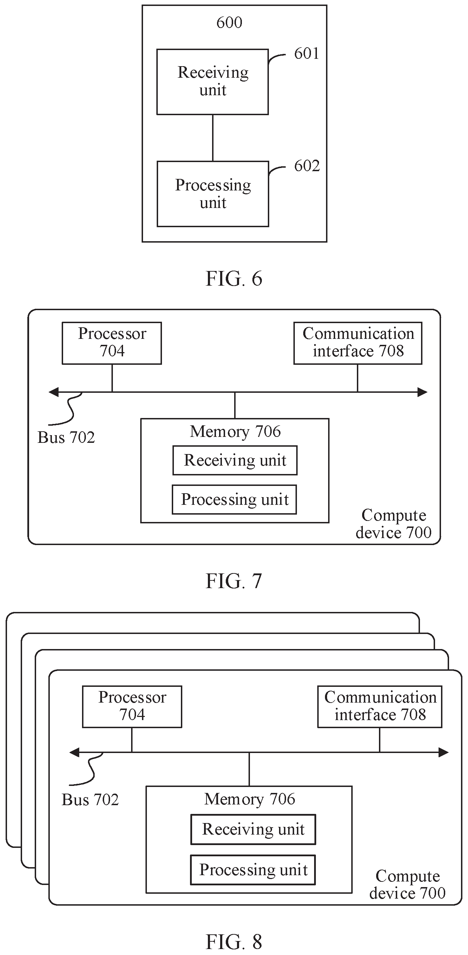

Refer to FIG. 6. An embodiment of this application provides a data storage apparatus 600. The apparatus 600 may be deployed in the database system 102 in the network architecture 100 shown in FIG. 1, or may be deployed in the database system 102 in the method 200 shown in FIG. 2, or may be deployed in the database system 102 in the method 500 shown in FIG. 5. The apparatus 600 includes:
a receiving unit 601, configured to receive a plurality of pieces of data, where each piece of data includes tag values of a plurality of tags, the plurality of tags include a first tag and a second tag that are specified as a sort key, and the first tag ranks before the second tag in the sort key; and
a processing unit 602, configured to determine a tag value set to which a tag value of the first tag in each piece of data belongs, where
the processing unit 602 is further configured to determine a storage sequence of the plurality of pieces of data based on a sequence in the sort key, identification information of the tag value set to which the tag value of the first tag in each piece of data belongs, and a tag value of the second tag in each piece of data; and
the processing unit 602 is further configured to store the plurality of pieces of data based on the storage sequence of the plurality of pieces of data.

Optionally, for a detailed implementation process in which the receiving unit 601 receives the plurality of pieces of data, refer to related content of step 204 in the method 200 shown in FIG. 2. Details are not described herein again.

Optionally, for a detailed implementation process in which the processing unit 602 determines the tag value set to which the tag value of the first tag in each piece of data belongs, refer to related content of step 205 in the method 200 shown in FIG. 2. Details are not described herein again.

Optionally, for a detailed implementation process in which the processing unit 602 determines the storage sequence of the plurality of pieces of data, refer to related content of step 206 in the method 200 shown in FIG. 2. Details are not described herein again.

Optionally, for a detailed implementation process in which the processing unit 602 stores the plurality of pieces of data based on the storage sequence of the plurality of pieces of data, refer to related content of step 207 in the method 200 shown in FIG. 2. Details are not described herein again.

Optionally, the receiving unit 601 is further configured to:
receive data structure information, where the data structure information is used to specify the first tag and the second tag as the sort key, the data structure information includes quantization identification information, and the quantization identification information indicates the first tag.

Optionally, for a detailed implementation process of receiving the data structure information by the receiving unit 601, refer to related content of step 204 in the method 200 shown in FIG. 2. Details are not described herein again.

Optionally, the processing unit 602 is configured to:
determine, based on a granularity of the tag value set and the tag value of the first tag in each piece of data, the tag value set to which the tag value of the first tag in each piece of data belongs, where the quantization identification information further indicates the granularity of the tag value set, or the granularity of the tag value set is determined based on a feature of the tag value of the first tag in the stored data.

Optionally, for a detailed implementation process in which the processing unit 602 determines, based on the granularity of the tag value set and the tag value of the first tag in each piece of data, the tag value set to which the tag value of the first tag in each piece of data belongs, refer to related content of step 205 in the method 200 shown in FIG. 2. Details are not described herein again.

Optionally, the processing unit 602 is further configured to:
determine a tag that needs to be quantized, where the tag that needs to be quantized is a tag having a tag value whose cardinality meets a high-cardinality condition in the plurality of tags; and
when the first tag is a tag that needs to be quantized, determine the tag value set to which the tag value of the first tag in each piece of data belongs.

Optionally, for a detailed implementation process in which the processing unit 602 determines the tag that needs to be quantized, refer to related content of step 204 in the method 200 shown in FIG. 2. Details are not described herein again.

Optionally, when the first tag is a tag that needs to be quantized, for a detailed implementation process in which the processing unit 602 determines the tag value set to which the tag value of the first tag in each piece of data belongs, refer to related content of step 205 in the method 200 shown in FIG. 2. Details are not described herein again.

Optionally, the tag value set to which the tag value of the first tag in each piece of data belongs is a tag value range including the tag value of the first tag in each piece of data, and the granularity of the tag value set is a length of the tag value range.

Optionally, the processing unit 602 is further configured to:
construct index information of the plurality of pieces of data, where the index information includes identification information of a tag value set to which a tag value of a first tag in at least one piece of selected data belongs, and two pieces of adjacently selected data are separated by one or more pieces of data in the storage sequence.

Optionally, for a detailed implementation process in which the processing unit 602 constructs the index information of the plurality of pieces of data, refer to related content of step 208 in the method 200 shown in FIG. 2. Details are not described herein again.

Optionally, the receiving unit 601 is further configured to receive a query request, where the query request includes a query condition related to the first tag.

The processing unit 602 is further configured to determine to-be-scanned data in the plurality of pieces of data based on the query condition and the identification information that is of the tag value set to which the tag value of the first tag belongs and that is in the index information.

The processing unit 602 is further configured to query the to-be-scanned data to obtain a query result that meets the query condition.

Optionally, for a detailed implementation process in which the receiving unit 601 receives the query request, refer to related content of step 502 in the method 500 shown in FIG. 5. Details are not described herein again.

Optionally, for a detailed implementation process in which the processing unit 602 determines the to-be-scanned data in the plurality of pieces of data, refer to related content of step 502 in the method 500 shown in FIG. 5. Details are not described herein again.

Optionally, for a detailed implementation process in which the processing unit 602 queries the to-be-scanned data to obtain the query result that meets the query condition, refer to related content of step 503 in the method 500 shown in FIG. 5. Details are not described herein again.

In this embodiment of this application, for each piece of data, in addition to the tag value, the tag value set to which the tag value of the first tag in the data belongs further includes another tag value of the first tag. In this way, cardinality of the tag value set to which the tag value of the first tag in each piece of data belongs is far less than cardinality of the tag value of the first tag in each piece of data. Because the first tag ranks before the second tag in the sort key, the processing unit determines the storage sequence of the plurality of pieces of data based on the sequence in the sort key, the identification information of the tag value set to which the tag value of the first tag in each piece of data belongs, and the tag value of the second tag in each piece of data. In addition, after the processing unit stores the plurality of pieces of data based on the storage sequence of the plurality of pieces of data, local orderliness of tag values of the second tag in the plurality of pieces of data can be improved, that is, orderliness of storing the data in the database can be improved.

As shown in FIG. 7, an embodiment of this application provides a compute device 700. For example, the compute device 700 may be a device in the database system 102 included in the network architecture 10 shown in FIG. 1, or the compute device 700 may be a device in the database system in the method 200 shown in FIG. 2 or the method 500 shown in FIG. 5.

As shown in FIG. 7, the compute device 700 includes a bus 702, a processor 704, a memory 706, and a communication interface 708. The processor 704, the memory 706, and the communication interface 708 communicate with each other through the bus 702. The compute device 700 may be a server or a terminal device. It should be understood that quantities of processors and memories in the compute device 700 are not limited in this application.

The bus 702 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used to represent the bus in FIG. 7, but this does not mean that there is only one bus or only one type of bus. The bus 702 may include a path for transmitting information between components (for example, the processor 704, the memory 706, and the communication interface 708) of the compute device 700.

The processor 704 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 706 may include a volatile memory (volatile memory), for example, a random access memory (random access memory, RAM). Alternatively, the memory 706 may include a non-volatile memory (non-volatile memory), for example, a read-only memory (read-only memory, ROM), a flash memory, a hard disk drive (hard disk drive, HDD), or a solid-state drive (solid-state drive, SSD).

Refer to FIG. 7. The memory 706 stores executable program code, and the processor 704 executes the executable program code to separately implement functions of the receiving unit 601 and the processing unit 602 in the apparatus 600 shown in FIG. 6, to implement the method provided in any one of the foregoing embodiments. In other words, the memory 706 stores instructions for performing the method provided in any one of the foregoing embodiments. Alternatively,
the communication interface 708 uses a transceiver module, for example, but not limited to, a network interface card or a transceiver, to implement communication between the compute device 700 and another device or a communication network.

An embodiment of this application further provides a data storage cluster. The data storage cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

As shown in FIG. 8, the data storage cluster includes at least one compute device 700. The memory 706 in one or more compute devices 700 in the data storage cluster may store same instructions for performing the method provided in any one of the foregoing embodiments.

In some possible implementations, the memory 706 in the one or more compute devices 700 in the data storage cluster may alternatively separately store a part of instructions for performing the data storage methods. In other words, a combination of the one or more compute devices 700 may jointly execute instructions for performing the method provided in any one of the foregoing embodiments.

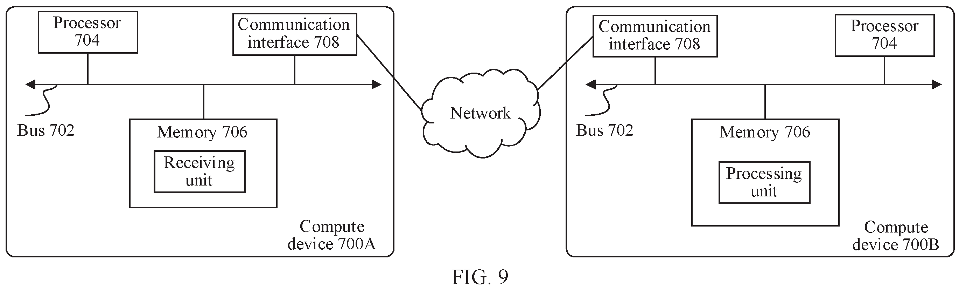

In some possible implementations, the one or more compute devices in the data storage cluster may be connected through a network. The network may be a wide area network, a local area network, or the like. FIG. 9 shows a possible implementation. As shown in FIG. 9, two compute devices 700A and 700B are connected through a network. Specifically, each compute device is connected to the network through a communication interface in the compute device.

In this possible implementation, the memory 706 in the compute device 700A stores instructions for performing a function of the receiving unit 601 in the embodiment shown in FIG. 6. In addition, the memory 706 in the compute device 700B stores instructions for performing a function of the processing unit 602 in the embodiment shown in FIG. 6.

It should be understood that functions of the compute device 700A shown in FIG. 9 may alternatively be completed by a plurality of compute devices 700. Similarly, functions of the compute device 700B may alternatively be completed by a plurality of compute devices 700.

An embodiment of this application further provides another data storage cluster. A connection relationship between compute devices in the data storage cluster may be similar to a connection manner of the data storage cluster in FIG. 9. A difference lies in that a memory 706 in one or more compute devices 700 in the data storage cluster may store same instructions for performing the method provided in any one of the foregoing embodiments.

In some possible implementations, the memory 706 in the one or more compute devices 700 in the data storage cluster may alternatively separately store a part of instructions for performing the method provided in any one of the foregoing embodiments. In other words, a combination of the one or more compute devices 700 may jointly execute instructions for performing the method provided in any one of the foregoing embodiments.

An embodiment of this application further provides a computer program product including instructions. The computer program product may be software or a program product that includes instructions and that can run on a compute device or can be stored in any usable medium. When the computer program product is run on at least one compute device, the at least one compute device is enabled to perform the method provided in any one of the foregoing embodiments.

An embodiment of this application further provide a computer-readable storage medium. The computer-readable storage medium may be any usable medium that can be stored by a compute device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions indicate the compute device to perform the method provided in any one of the foregoing embodiments.

A person of ordinary skill in the art may understand that all or some of the steps of embodiments may be completed by hardware or a program instructing related hardware. The program may be stored in a computer-readable storage medium. The storage medium may be a read-only memory, a magnetic disk, an optical disc, or the like.

The foregoing descriptions are merely optional embodiments of this application, but are not intended to limit this application. Any modification, equivalent replacement, improvement, or the like made within the principle of this application should fall within the protection scope of this application.

## Claims

1. A data storage method, wherein the method comprises:
receiving a plurality of pieces of data, wherein each piece of data comprises tag values of a plurality of tags, the plurality of tags comprise a first tag and a second tag that are specified as a sort key, and the first tag ranks before the second tag in the sort key;
determining a tag value set to which a tag value of the first tag in each piece of data belongs;
determining a storage sequence of the plurality of pieces of data based on a sequence in the sort key, identification information of the tag value set to which the tag value of the first tag in each piece of data belongs, and a tag value of the second tag in each piece of data; and
storing the plurality of pieces of data based on the storage sequence of the plurality of pieces of data.

2. The method according to claim 1, wherein before the receiving the plurality of pieces of data, the method further comprises:
receiving data structure information, wherein the data structure information is used to specify the first tag and the second tag as the sort key, the data structure information comprises quantization identification information, and the quantization identification information indicates the first tag.

3. The method according to claim 2, wherein the determining the tag value set to which the tag value of the first tag in each piece of data belongs comprises:
determining, based on a granularity of the tag value set and the tag value of the first tag in each piece of data, the tag value set to which the tag value of the first tag in each piece of data belongs, wherein the quantization identification information further indicates the granularity of the tag value set, or the granularity of the tag value set is determined based on a feature of the tag value of the first tag in the stored data.

4. The method according to claim 1, wherein the method further comprises:
determining a tag that needs to be quantized, wherein the tag that needs to be quantized is a tag having a tag value whose cardinality meets a high-cardinality condition in the plurality of tags; and
when the first tag is a tag that needs to be quantized, determining the tag value set to which the tag value of the first tag in each piece of data belongs.

5. The method according to claim 3, wherein the tag value set to which the tag value of the first tag in each piece of data belongs is a tag value range comprising the tag value of the first tag in each piece of data, and the granularity of the tag value set is a length of the tag value range.

6. The method according to any one of claims 1 to 5, wherein the method further comprises:
constructing index information of the plurality of pieces of data, wherein the index information comprises identification information of a tag value set to which a tag value of a first tag in at least one piece of selected data belongs, and two pieces of adjacently selected data are separated by one or more pieces of data in the storage sequence.

7. The method according to claim 6, wherein the method further comprises:
receiving a query request, wherein the query request comprises a query condition related to the first tag;
determining to-be-scanned data in the plurality of pieces of data based on the query condition and the identification information that is of the tag value set to which the tag value of the first tag belongs and that is in the index information; and
querying the to-be-scanned data to obtain a query result that meets the query condition.

8. A data storage apparatus, wherein the apparatus comprises:
a receiving unit, configured to receive a plurality of pieces of data, wherein each piece of data comprises tag values of a plurality of tags, the plurality of tags comprise a first tag and a second tag that are specified as a sort key, and the first tag ranks before the second tag in the sort key; and
a processing unit, configured to determine a tag value set to which a tag value of the first tag in each piece of data belongs, wherein
the processing unit is further configured to determine a storage sequence of the plurality of pieces of data based on a sequence in the sort key, identification information of the tag value set to which the tag value of the first tag in each piece of data belongs, and a tag value of the second tag in each piece of data; and
the processing unit is further configured to store the plurality of pieces of data based on the storage sequence of the plurality of pieces of data.

9. The apparatus according to claim 8, wherein the receiving unit is further configured to:
receive data structure information, wherein the data structure information is used to specify the first tag and the second tag as the sort key, the data structure information comprises quantization identification information, and the quantization identification information indicates the first tag.

10. The apparatus according to claim 9, wherein the processing unit is configured to:
determine, based on a granularity of the tag value set and the tag value of the first tag in each piece of data, the tag value set to which the tag value of the first tag in each piece of data belongs, wherein the quantization identification information further indicates the granularity of the tag value set, or the granularity of the tag value set is determined based on a feature of the tag value of the first tag in the stored data.

11. The apparatus according to claim 8, wherein the processing unit is further configured to:
determine a tag that needs to be quantized, wherein the tag that needs to be quantized is a tag having a tag value whose cardinality meets a high-cardinality condition in the plurality of tags; and
when the first tag is a tag that needs to be quantized, determine the tag value set to which the tag value of the first tag in each piece of data belongs.

12. The apparatus according to claim 11, wherein the tag value set to which the tag value of the first tag in each piece of data belongs is a tag value range comprising the tag value of the first tag in each piece of data, and the granularity of the tag value set is a length of the tag value range.

13. The apparatus according to any one of claims 8 to 12, wherein the processing unit is further configured to:
construct index information of the plurality of pieces of data, wherein the index information comprises identification information of a tag value set to which a tag value of a first tag in at least one piece of selected data belongs, and two pieces of adjacently selected data are separated by one or more pieces of data in the storage sequence.

14. The apparatus according to claim 13, wherein
the receiving unit is further configured to receive a query request, wherein the query request comprises a query condition related to the first tag;
the processing unit is further configured to determine to-be-scanned data in the plurality of pieces of data based on the query condition and the identification information that is of the tag value set to which the tag value of the first tag belongs and that is in the index information; and
the processing unit is further configured to query the to-be-scanned data to obtain a query result that meets the query condition.

15. A compute device cluster, comprising at least one compute device, wherein each compute device comprises a processor and a memory; and
the processor of the at least one compute device is configured to execute instructions stored in the memory of the at least one compute device, to enable the compute device cluster to perform the method according to any one of claims 1 to 7.

16. A computer-readable storage medium, comprising computer program instructions, wherein when the computer program instructions are executed by a compute device cluster, the compute device cluster performs the method according to any one of claims 1 to 7.

17. A computer program product comprising instructions, wherein when the instructions are run by a compute device cluster, the compute device cluster is enabled to perform the method according to any one of claims 1 to 7.
